# FASCICULE DE BREVET EUROPEEN

(11) **EP 3 537 591 B1**
(45) Date de publication et mention de la délivrance du brevet: **18.11.2020**
(21) Numéro de dépôt: 18160978.5
(22) Date de dépôt: 09.03.2018
(51) Int. Cl.: H02N 2/00, H02N 2/10, G04C 3/12

(54) **MOTEUR PIEZOELECTRIQUE ROTATIF A PRECONTRAINTE AXIALE**
PIEZOELEKTRISCHER ROTATIONSMOTOR MIT AXIALER VORSPANNUNG
ROTARY PIEZOELECTRIC MOTOR WITH AXIAL PRE-STRESSING

(43) Date de publication de la demande: 11.09.2019
(73) Titulaire: ETA SA Manufacture Horlogère Suisse, 2540 Grenchen (CH)
(72) Inventeur: Lagorgette, Pascal, 2502 Bienne (CH); Meyer, Pascal, 2000 Neuchâtel (CH)
(74) Mandataire: ICB SA

(56) Documents cités:
- CN-A- 101 707 444
- CN-A- 105 406 760
- CN-A- 107 046 380
- US-A1- 2007 164 635

## Description

### Domaine de l'invention

L'invention se rapporte au domaine technique des moteurs piézoélectriques rotatifs.

### Arrière-plan de l'invention

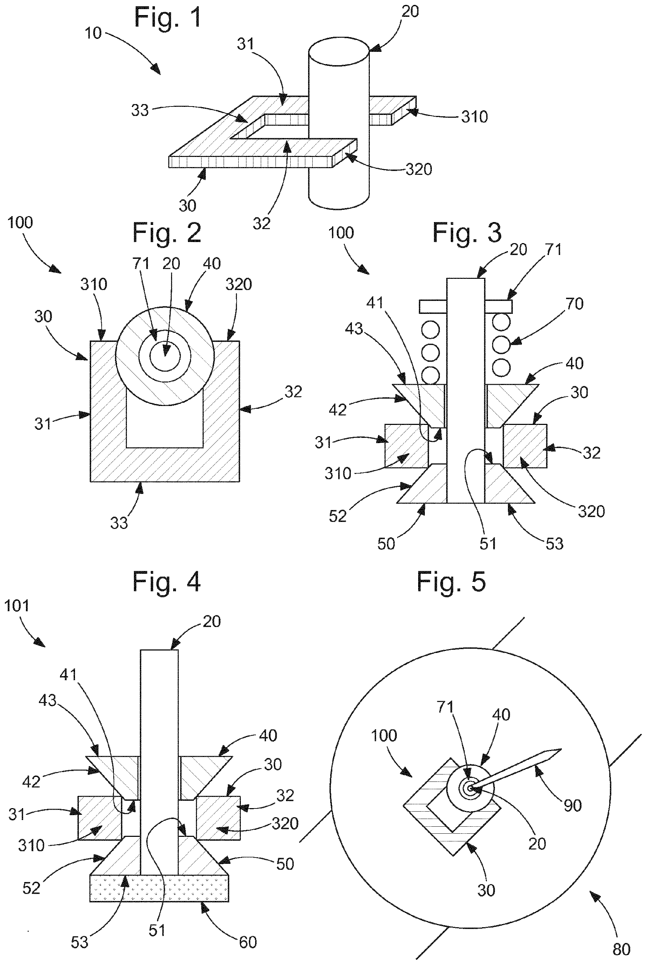

Un moteur piézoélectrique rotatif comporte classiquement un élément passif et un actionneur permettant de mettre en rotation l'élément passif en utilisant l'effet piézoélectrique. En référence à la figure 1, on connait en particulier les moteurs piézoélectriques rotatifs 10 pour lesquels l'élément passif 20 est un cylindre et l'actionneur piézoélectrique comporte un résonateur 30 comprenant une paire de bras 31, 32 connectés l'un à l'autre au niveau d'une zone de connexion 33, sensiblement en forme de diapason ou de U. L'actionneur piézoélectrique comporte en outre deux éléments piézoélectriques (non représentés), chacun attaché à l'un des bras 31, 32, et jouant le rôle de moyens d'excitation des bras pour leur imposer des vibrations. L'élément passif 20 passe entre les bras 31, 32 du résonateur. Plus précisément, une région de la surface latérale de l'élément passif 20 est en contact de part et d'autre avec les extrémités libres 310, 320 des bras 31, 32, de sorte que l'élément passif 20 soit mis en rotation par friction des extrémités libres 310, 320 des bras 31, 32 sur la région de contact. Un tel moteur est connu, par exemple, du document US2007164635 (Fig. 28).

Un moteur de ce type nécessite une précontrainte (aussi appelée précharge) à l'interface entre le résonateur et l'élément passif, pour fixer le couple de maintien sans alimentation du moteur, c'est-à-dire sans excitation des bras.

Le document CN 101 707 444 A divulgue un moteur piézoélectrique rotatif avec les caractéristiques du préambule de la revendication 1, notamment avec un actionneur piézoélectrique comportant un résonateur, un élément passif comprenant une partie cylindrique s'étendant orthogonalement au résonateur, la partie cylindrique étant apte à être mise en rotation par le résonateur, l'élément passif comprenant deux troncs de cône, les petites bases des troncs étant disposées en vis-à-vis, la partie cylindrique de l'élément passif traversant axialement le troncs, l'un des troncs étant mobile le long d'une portion de la partie cylindrique, et un des troncs étant solidaire de la partie cylindrique, et un ressort à pression entre le tronc mobile et une butée fixée à la partie cylindrique pour maintenir les surfaces latérales des troncs en contact avec le résonateur.

### Résumé de l'invention

Le but de la présente invention est de proposer un moteur piézoélectrique rotatif équipé d'un système de précontrainte.

A cet effet, l'invention se rapporte à un moteur piézoélectrique rotatif comme défini dans la revendication 1. Selon l'invention, le moteur comprend
- un actionneur piézoélectrique comportant un résonateur comprenant une paire de bras connectés à l'une de leurs extrémités au niveau d'une zone de connexion, les deux autres extrémités étant dites libres,
- un élément passif comprenant une partie cylindrique s'étendant sensiblement orthogonalement au résonateur et passant entre les extrémités libres des bras.

L'élément passif comprend en outre :
- un tronc de cône dit inférieur et un tronc de cône dit supérieur, les petites bases du tronc inférieur et du tronc supérieur étant disposées en vis-à-vis et de part et d'autre du résonateur, la partie cylindrique de l'élément passif traversant axialement au moins en partie le tronc inférieur et le tronc supérieur, le tronc supérieur étant mobile le long d'une portion de la partie cylindrique, et au moins un des troncs étant solidaire en rotation de la partie cylindrique,
- un dispositif de maintien des surfaces latérales des troncs inférieur et supérieur en contact avec chacune des extrémités libres des bras du résonateur.

Ainsi, une précontrainte axiale est réalisée entre l'actionneur piézoélectrique et l'élément passif : une première force axiale est exercée par le tronc supérieur sur les extrémités libres des bras, une deuxième force axiale est exercée par le tronc inférieur sur les extrémités libres des bras, la première force et la deuxième force étant de sens opposés. Le terme « axial » fait référence à l'axe de la partie cylindrique, qui est également l'axe du tronc inférieur et l'axe du tronc supérieur.

Le système de précontrainte comprend donc les troncs de cône et le dispositif de maintien. On note qu'un avantage de l'invention est que le système de précontrainte est autoporté.

Etant donné qu'au moins un des troncs est solidaire en rotation de la partie cylindrique et que ledit tronc est en contact avec les extrémités libres des deux bras du résonateur, les bras sont aptes à mettre la partie cylindrique en rotation. Avantageusement, les deux troncs sont solidaires en rotation de la partie cylindrique de sorte à transmettre tout le couple à la partie cylindrique.

Avantageusement, la précontrainte est équilibrée, de sorte que les normes de la première et de la deuxième force sont égales. Ainsi, il n'y a pas d'effort axial sur le moteur piézoélectrique : un tel effort pourrait déformer le résonateur et perturber le fonctionnement du moteur.

Dans un premier mode de réalisation, le dispositif de maintien est apte à générer une force élastique s'appliquant sur le tronc supérieur. Par exemple, le dispositif de maintien comporte une butée fixée à la partie cylindrique, et un élément élastique, par exemple un ressort, une lame ou un élément caoutchouteux, en appui d'une part sur la butée et d'autre part sur la grande base du tronc supérieur.

Dans un deuxième mode de réalisation, le dispositif de maintien est apte à générer une force magnétique s'appliquant sur le tronc supérieur. Par exemple, le dispositif de maintien comporte un aimant fixé à la grande base du tronc inférieur, le tronc supérieur comprenant un matériau magnétique, par exemple un matériau ferromagnétique, de sorte à créer une force d'attraction entre le tronc supérieur et l'aimant.

Les deux modes de réalisation précités sont des exemples de génération de la première force axiale. Selon une première alternative, le tronc inférieur est posé au niveau de sa grande base sur un support ou sur un élément ou ensemble d'éléments lui-même posé sur le support. La deuxième force axiale est alors la force s'appliquant en réaction à la poussée des extrémités libres des bras sur le tronc inférieur, ladite poussée étant provoquée par la première force axiale. Selon une deuxième alternative, le dispositif de maintien comporte en outre une deuxième butée fixée à la partie cylindrique, et un deuxième élément élastique en appui d'une part sur la deuxième butée et d'autre part sur la grande base du tronc inférieur, ou alors le dispositif de maintien comporte en outre un deuxième aimant fixé à la grande base du tronc supérieur, le tronc inférieur comprenant un matériau magnétique, par exemple un matériau ferromagnétique, de sorte à créer une force d'attraction entre le tronc inférieur et le deuxième aimant.

Dans un mode de réalisation, la partie cylindrique comporte au moins une rainure et chacun des troncs inférieur et supérieur comporte au moins une languette capable de glisser dans la rainure, de sorte que le tronc inférieur et le tronc supérieur sont mobiles dans la rainure le long de l'axe de la partie cylindrique mais solidaire en rotation de la partie cylindrique.

L'invention se rapporte également à une pièce d'horlogerie comportant un moteur piézoélectrique tel que détaillé ci-dessus.

Dans un mode de réalisation non limitatif, la pièce d'horlogerie comporte une aiguille fixée à une extrémité de la partie cylindrique.

### Description sommaire des dessins

D'autres particularités et avantages ressortiront clairement de la description qui en est faite ci-après, à titre indicatif et nullement limitatif, en référence aux dessins annexés, dans lesquels :
- la figure 1, déjà décrite, représente schématiquement une partie d'un moteur piézoélectrique rotatif selon l'art antérieur, vue de dessus,
- la figure 2 représente schématiquement une partie d'un moteur piézoélectrique rotatif selon un premier mode de réalisation de l'invention, vue de dessus,
- la figure 3 représente schématiquement la partie du moteur piézoélectrique rotatif de la figure 2, vue en coupe axiale,
- la figure 4 représente schématiquement une partie d'un moteur piézoélectrique rotatif selon un deuxième mode de réalisation de l'invention, vue en coupe axiale,
- la figure 5 représente schématiquement en partie une pièce d'horlogerie comprenant la partie du moteur piézoélectrique rotatif de la figure 2 et une aiguille fixée audit moteur.

### Description détaillée des modes de réalisation préférés

Les figures 2 et 3 montrent une partie d'un moteur piézoélectrique 100 selon un premier mode de réalisation de l'invention, et la figure 4 montre un moteur piézoélectrique 101 selon un deuxième mode de réalisation de l'invention. Dans les deux cas, le moteur 100, 101 comporte un élément passif comprenant une partie cylindrique 20, et un actionneur piézoélectrique permettant de mettre en rotation la partie cylindrique 20 en utilisant l'effet piézoélectrique.

L'actionneur piézoélectrique comporte des moyens d'excitation piézoélectrique, non représentés, et un résonateur 30 comprenant deux bras 31, 32 aptes à osciller. Les moyens d'excitation sont avantageusement constitués de deux parties, chacune attachée à un bras différent. Toutefois, d'autres modes de réalisation des moyens d'excitation sont possibles, ils peuvent par exemple être constitués d'une seule partie disposés au niveau d'une jointure entre les bras. Lors de l'application d'une tension adaptée aux moyens d'excitation, les moyens d'excitation se déforment, et des contraintes mécaniques sont transmises aux bras 31, 32 qui se mettent alors à osciller. Par une conception et un montage appropriés des moyens d'excitation sur les bras, des oscillations multidimensionnelles de forme souhaitée peuvent être réalisées.

Les bras 31, 32 sont connectés au niveau d'une zone de connexion 33, et s'étendent sensiblement parallèlement l'un à l'autre depuis ladite zone de connexion 33. Le résonateur a donc globalement une forme de diapason, c'est-à-dire une forme de U. Toutefois, cette forme n'est pas limitative. Les extrémités des bras non connectées à la zone de connexion 33, sont dites extrémités libres 310, 320. L'amplitude des oscillations des bras 31, 32 est maximale à ces extrémités 310, 320.

La partie cylindrique 20 s'étend sensiblement orthogonalement au résonateur 30, c'est-à-dire orthogonalement au plan contenant les axes des bras 31, 32 du résonateur 30, et passe entre les deux extrémités libres 310, 320.

L'élément passif comporte en outre deux troncs de cônes (aussi appelés cônes tronqués), dits tronc supérieur 40 et tronc inférieur 50, coaxiaux avec la partie cylindrique 20. Dans le mode de réalisation préféré, ces deux troncs de cônes 40, 50 sont mobiles en translation le long de portions de la partie cylindrique 20, et solidaires en rotation de la partie cylindrique 20. Toutefois, le tronc supérieur 40 seulement pourrait être mobile en translation le long d'une portion de la partie cylindrique 20, et l'un seulement des deux troncs 40, 50 pourrait être solidaire en rotation de la partie cylindrique 20. Les petites bases 41, 51 des deux troncs 40, 50 sont en regard l'une de l'autre.

Dans les deux modes de réalisation non limitatifs illustrés, la partie cylindrique 20 s'étend verticalement (dans un repère terrestre), et le tronc inférieur 50 est positionné à l'extrémité inférieure de la partie cylindrique 20 (soit sous l'effet de la gravité s'il est mobile en translation, soit parce qu'il y a été fixé).

Les extrémités libres 310, 320 des bras 31, 32 du résonateur 30 se trouvent prises en sandwich entre les deux troncs 40, 50. Plus précisément, chacune des extrémités libres 310, 320 est en contact avec les surfaces latérales 42, 52 des deux troncs 40, 50.

Puisqu'au moins un des troncs 40, 50 est solidaire en rotation de la partie cylindrique 20, les oscillations multidimensionnelles des extrémités libres 310, 320 des bras 31, 32 permettent d'imposer une rotation à la partie cylindrique 20 autour de son axe par frottement desdites extrémités 310, 320 contre ledit au moins un tronc 40, 50.

En plus de son poids, une deuxième force radiale s'exerce sur le tronc supérieur 40 par l'intermédiaire d'un dispositif de maintien appartenant à l'élément passif. Ces deux forces permettent aux surfaces latérales 42, 52 des deux troncs 40, 50 d'appuyer radialement sur les extrémités libres 310, 320 des bras 31, 32, forçant lesdites extrémités libres 310, 320 à s'éloigner l'une de l'autre et créant ainsi une précontrainte entre le résonateur 30 et l'élément passif.

Dans le premier mode de réalisation, ledit dispositif de maintien comporte un élément élastique, ici un ressort 70, et une butée 71. La butée 71 est solidaire de la partie cylindrique 20, et le ressort 70 est tel qu'il appuie d'un côté sur la grande base 43 du tronc supérieur 40 et de l'autre côté sur la butée 71 de sorte à pousser le tronc supérieur 40 vers le tronc inférieur 50.

Dans le deuxième mode de réalisation, le dispositif de maintien comporte un aimant 60 placé du côté du tronc inférieur 50 et le tronc supérieur 40 comporte un matériau magnétique de sorte à attirer le tronc supérieur 40 vers l'aimant 60 et par conséquent vers le tronc inférieur 50. L'aimant 60 est par exemple attaché à la grande base 53 du tronc inférieur 50. L'aimant 60 pourrait alternativement être attaché à la petite base 51 du tronc inférieur 50. En outre, au lieu de comporter un matériau magnétique, un autre aimant disposé de sorte à être attiré par l'aimant 60 pourrait être attaché au tronc supérieur 40, notamment à la petite base 41 du tronc supérieur 40.

On note qu'au moins dans les modes de réalisation pour lesquels l'axe de la partie cylindrique 20 n'est pas disposé verticalement et le tronc inférieur 50 est mobile en translation le long d'une portion de la partie cylindrique 20, un deuxième dispositif de maintien est nécessaire pour maintenir le tronc inférieur 50 plaqué contre les extrémités libres 310, 320 des bras 31, 32 du résonateur 30.

Dans un mode de réalisation, ledit deuxième dispositif de maintien comporte un deuxième élément élastique (un ressort, une lame ou encore un élément caoutchouteux) et une deuxième butée. La deuxième butée est solidaire de la partie cylindrique 20, et le deuxième élément élastique est tel qu'il appuie d'un côté sur la grande base 53 du tronc inférieur 50 et de l'autre côté sur la deuxième butée de sorte à pousser le tronc inférieur 50 vers le tronc supérieur 40. Dans un autre mode de réalisation, le deuxième dispositif de maintien comporte un aimant, dit deuxième aimant, placé du côté du tronc supérieur 40 et le tronc inférieur 50 comporte un matériau magnétique de sorte à attirer le tronc inférieur 50 vers le deuxième aimant et par conséquent vers le tronc supérieur 40. Le deuxième aimant est par exemple attaché à la grande base 43 du tronc supérieur 40. Le deuxième aimant pourrait alternativement être attaché à la petite base 41 du tronc supérieur 40. En outre, au lieu de comporter un matériau magnétique, un autre aimant disposé de sorte à être attiré par le deuxième aimant pourrait être attaché au tronc inférieur 50, notamment à la petite base 51 du tronc inférieur 50.

Enfin, la figure 5 montre une pièce d'horlogerie 80 de type montre-bracelet, comprenant une aiguille 90 fixée à l'extrémité supérieure de la partie cylindrique 20 du moteur piézoélectrique 100 selon le premier mode de réalisation. Toutefois, le moteur piézoélectrique selon un des modes de réalisation de l'invention pourrait être utilisé pour entrainer en rotation non pas une aiguille, mais un disque (par exemple un disque des quantièmes ou un disque de phase de lune), une roue ou encore un anneau.

On comprendra que diverses modifications et/ou améliorations et/ou combinaisons évidentes pour l'homme du métier peuvent être apportées aux différentes formes d'exécution de l'invention exposée ci-dessus sans sortir du cadre de l'invention définie par les revendications annexées.

## Revendications

1. Moteur piézoélectrique (100 ; 101) rotatif comprenant :
- un actionneur piézoélectrique comportant un résonateur (30),
- un élément passif comprenant une partie cylindrique (20) s'étendant sensiblement orthogonalement au résonateur (30), la partie cylindrique (20) étant apte à être mise en rotation par le résonateur (30),
l'élément passif comprenant :
- un tronc de cône dit inférieur (50) et un tronc de cône dit supérieur (40), les petites bases (51, 41) du tronc inférieur et du tronc supérieur étant disposées en vis-à-vis et de part et d'autre du résonateur (30), la partie cylindrique (20) de l'élément passif traversant axialement au moins en partie le tronc inférieur (50) et le tronc supérieur (40), le tronc supérieur (40) étant mobile le long d'une portion de la partie cylindrique (20), et au moins un des troncs (50, 40) étant solidaire en rotation de la partie cylindrique (20),
- un dispositif de maintien (70, 71 ; 60) des surfaces latérales (52, 42) des troncs inférieur et supérieur (50, 40) en contact avec le résonateur (30),
**caractérise en ce que**
- le résonateur comprend une paire de bras (31, 32) connectés à l'une de leurs extrémités au niveau d'une zone de connexion (33), les deux autres extrémités (310, 320) étant dites libres, que
- la partie cylindrique (20) de l'élément passif passe entre les extrémités libres (310, 320) des bras (31, 32) et est apte à être mise en rotation par friction des extrémités libres (310, 320) sur les surfaces latérales (52,42) des troncs inférieur et supérieur (50, 40), et que
- le dispositif de maintien (70, 71; 60) est apte à maintenir les surfaces latérales (52, 42) des troncs inférieur et supérieur (50, 40) en contact avec chacune des extrémités libres (310, 320) des bras (31, 32) du résonateur (30).

2. Moteur piézoélectrique (100 ; 101) selon la revendication 1, dans lequel les deux troncs (50, 40) sont solidaires en rotation de la partie cylindrique (20).

3. Moteur piézoélectrique (100) selon l'une des revendications précédentes, dans lequel le dispositif de maintien (70, 71) est apte à générer une force élastique s'appliquant sur le tronc supérieur (40).

4. Moteur piézoélectrique (100) selon la revendication précédente, dans lequel le dispositif de maintien (70, 71) comporte une butée (71) fixée à la partie cylindrique (20), et un élément élastique (70) en appui d'une part sur la butée (71) et d'autre part sur la grande base (43) du tronc supérieur (40).

5. Moteur piézoélectrique (101) selon l'une des revendications 1 ou 2, dans lequel le dispositif de maintien (60) est apte à générer une force magnétique s'appliquant sur le tronc supérieur (40).

6. Moteur piézoélectrique (101) selon la revendication 5, dans lequel le dispositif de maintien (60) comporte un aimant (60) fixé à la grande base (53) du tronc inférieur (50), le tronc supérieur (40) comprenant un matériau magnétique de sorte à créer une force d'attraction entre le tronc supérieur (40) et l'aimant (60).

7. Moteur piézoélectrique (100 ; 101) selon l'une des revendications 3 à 6, dans lequel le dispositif de maintien (70, 71 ; 60) comporte une deuxième butée fixée à la partie cylindrique (20), et un deuxième élément élastique en appui d'une part sur la deuxième butée et d'autre part sur la grande base (53) du tronc inférieur (50).

8. Moteur piézoélectrique (100 ; 101) selon l'une des revendications 3 à 6, dans lequel le dispositif de maintien (70, 71 ; 60) comporte un deuxième aimant fixé à la grande base (43) du tronc supérieur (40), le tronc inférieur (50) comprenant un matériau magnétique de sorte à créer une force d'attraction entre le tronc inférieur (50) et le deuxième aimant.

9. Moteur piézoélectrique (100 ; 101) selon l'une des revendications 2 à 8, dans lequel la partie cylindrique (20) comporte au moins une rainure et chacun des troncs inférieur et supérieur (40, 50) comporte au moins une languette capable de glisser dans la rainure.

10. Pièce d'horlogerie (80) comportant un moteur piézoélectrique (100 ; 101) selon l'une des revendications précédentes.

11. Pièce d'horlogerie (80) selon la revendication précédente, comportant une aiguille (90) fixée à une extrémité de la partie cylindrique (20).

## Patentansprüche

1. Piezoelektrischer Rotationsmotor (100; 101), umfassend:
- einen piezoelektrischen Aktuator, der einen Resonator (30) aufweist,
- ein passives Element, das einen zylindrischen Teil (20) umfasst, der sich etwa orthogonal zum Resonator (30) erstreckt, wobei der zylindrische Teil (20) imstande ist, von dem Resonator (30) in Rotation versetzt zu werden,
wobei das passive Element umfasst:
- einen unteren Kegelstumpf (50) und einen oberen Kegelstumpf (40), wobei die kleinen Grundflächen (51, 41) des unteren Stumpfs und des oberen Stumpfs gegenüber und beiderseits des Resonators (30) angeordnet sind, wobei der zylindrische Teil (20) des passiven Elements den unteren Stumpf (50) und den oberen Stumpf (40) mindestens teilweise axial durchquert, wobei der obere Stumpf (40) entlang eines Abschnitts des zylindrischen Teils (20) beweglich ist und mindestens einer der Stümpfe (50, 40) mit dem zylindrischen Teil (20) rotatorisch fest verbunden ist,
- eine Haltevorrichtung (70, 71; 60) der seitlichen Flächen (52, 42) des unteren und oberen Stumpfs (50, 40) im Kontakt mit dem Resonator (30),
**dadurch gekennzeichnet, dass**
- der Resonator ein Paar Arme (31, 32) umfasst, die an einem ihrer Enden im Bereich einer Verbindungszone (33) verbunden sind, wobei die zwei anderen Enden (310, 320) frei sind, dass
- der zylindrische Teil (20) des passiven Elements zwischen den freien Enden (310, 320) der Arme (31, 32) verläuft und imstande ist, durch Reibung der freien Enden (310, 320) auf den seitlichen Flächen (52, 42) des oberen und unteren Stumpfs (50, 40) in Rotation versetzt zu werden, und dass
- die Haltevorrichtung (70, 71; 60) imstande ist, die seitlichen Flächen (52, 42) des unteren und oberen Stumpfs (50, 40) im Kontakt mit jedem der freien Enden (310, 320) der Arme (31, 32) des Resonators (30) zu halten.

2. Piezoelektrischer Motor (100; 101) nach Anspruch 1, wobei die zwei Stümpfe (50, 40) mit dem zylindrischen Teil (20) rotatorisch fest verbunden sind.

3. Piezoelektrischer Motor (100) nach einem der vorangehenden Ansprüche, wobei die Haltevorrichtung (70, 71) imstande ist, eine elastische Kraft zu erzeugen, die auf den oberen Stumpf (40) wirkt.

4. Piezoelektrischer Motor (100) nach vorangehendem Anspruch, wobei die Haltevorrichtung (70, 71) einen Anschlag (71) aufweist, der an dem zylindrischen Teil (20) befestigt ist, und ein elastisches Element (70), das sich zum einen auf dem Anschlag (71) und zum anderen auf der großen Grundfläche (43) des oberen Stumpfs (40) abstützt.

5. Piezoelektrischer Motor (101) nach einem der Ansprüche 1 oder 2, wobei die Haltevorrichtung (60) imstande ist, eine magnetische Kraft zu erzeugen, die auf den oberen Stumpf (40) wirkt.

6. Piezoelektrischer Motor (101) nach Anspruch 5, wobei die Haltevorrichtung (60) einen Magnet (60) aufweist, der an der großen Grundfläche (53) des unteren Stumpfs (50) befestigt ist, wobei der obere Stumpf (40) ein magnetisches Material umfasst, so dass eine Anziehungskraft zwischen dem oberen Stumpf (40) und dem Magnet (60) erzeugt wird.

7. Piezoelektrischer Motor (100; 101) nach einem der Ansprüche 3 bis 6, wobei die Haltevorrichtung (70, 71; 60) einen zweiten Anschlag aufweist, der am zylindrischen Teil (20) befestigt ist, und ein zweites elastisches Element, das sich zum einen auf dem zweiten Anschlag und zum anderen auf der großen Grundfläche (53) des unteren Stumpfs (50) abstützt.

8. Piezoelektrischer Motor (100; 101) nach einem der Ansprüche 3 bis 6, wobei die Haltevorrichtung (70, 71; 60) einen zweiten Magnet aufweist, der an der großen Grundfläche (43) des oberen Stumpfs (40) befestigt ist, wobei der untere Stumpf (50) ein magnetisches Material umfasst, so dass eine Anziehungskraft zwischen dem unteren Stumpf (50) und dem zweiten Magnet erzeugt wird.

9. Piezoelektrischer Motor (100; 101) nach einem der Ansprüche 2 bis 8, wobei der zylindrische Teil (20) mindestens eine Nut aufweist und jeder von dem unteren und oberen Stupf (40, 50) mindestens eine Zunge aufweist, die imstande ist, in der Nut zu gleiten.

10. Uhr (80), die einen piezoelektrischen Motor (100; 101) nach einem der vorangehenden Ansprüche aufweist.

11. Uhr (80) nach vorangehendem Anspruch, die einen Zeiger (90) aufweist, der an einem Ende des zylindrischen Teils (20) befestigt ist.

## Claims

1. Rotating piezoelectric motor (100; 101) comprising:
- a piezoelectric actuator including a resonator (30),
- a passive element comprising a cylindrical part (20) extending substantially orthogonally to the resonator (30), the cylindrical part (20) being able to be rotated by the resonator (30),
the passive element comprising:
- a lower truncated cone (50) and an upper truncated cone (40), the small bases (51, 41) of the lower truncated cone and of the upper truncated cone being arranged facing each other and on either side of the resonator (30), the cylindrical part (20) of the passive element at least partly axially traversing the lower truncated cone (50) and the upper truncated cone (40), the upper truncated cone (40) being movable along one portion of the cylindrical part (20), and at least one of the truncated cones (50, 40) being integral in rotation with the cylindrical part (20),
- a device (70, 71; 60) for holding the lateral surfaces (52, 42) of the lower and upper truncated cones (50, 40) in contact with the resonator (30),
**characterised in that**
- the resonator comprises a pair of arms (31, 32) connected at one of their ends in a connection area (33), the other two ends (310, 320) being referred to as 'free', that
- the cylindrical part (20) of the passive element passes between the free ends (310, 320) of the arms (31, 32) and is able to be rotated by friction of the free ends (310, 320) on the lateral surfaces (52, 42) of the lower and upper truncated cones (50, 40), and that
- the holding device (70, 71; 60) is able to hold the lateral surfaces (52, 42) of the lower and upper truncated cones (50, 40) in contact with each of the free ends (310, 320) of the arms (31, 32) of the resonator (30).

2. Piezoelectric motor (100; 101) according to claim 1, wherein the two truncated cones (50, 40) are integral in rotation with the cylindrical part (20).

3. Piezoelectric motor (100) according to any of the preceding claims, wherein the holding device (70, 71) is able to generate an elastic force on the upper truncated cone (40).

4. Piezoelectric motor (100) according to the preceding claim, wherein the holding device (70, 71) includes a stop (71) fixed to the cylindrical part (20), and an elastic element (70) bearing, on the one hand, on the stop (71) and on the other hand, on the large base (43) of the upper truncated cone (40).

5. Piezoelectric motor (101) according to any of claims 1 or 2, wherein the holding device (60) is able to generate a magnetic force on the upper truncated cone (40).

6. Piezoelectric motor (101) according to claim 5, wherein the holding device (60) includes a magnet (60) fixed to the large base (53) of the lower truncated cone (50), and the upper truncated cone (40) comprising a magnetic material, so as to create a force of attraction between the upper truncated cone (40) and the magnet (60).

7. Piezoelectric motor (100; 101) according to any of claims 3 to 6, wherein the holding device (70, 71; 60) includes a second stop fixed to the cylindrical part (20), and a second elastic element bearing, on the one hand, on the second stop and on the other hand, on the large base (53) of the lower truncated cone (50).

8. Piezoelectric motor (100; 101) according to any of claims 3 to 6, wherein the holding device (70, 71; 60) includes a second magnet fixed to the large base (43) of the upper truncated cone (40), the lower truncated cone (50) comprising a magnetic material so as to create a force of attraction between the lower truncated cone (50) and the second magnet.

9. Piezoelectric motor (100, 101) according to any of claims 2 to 8, wherein the cylindrical part (20) includes at least one groove and each of the lower and upper truncated cones (40, 50) includes at least one tongue capable of sliding inside the groove.

10. Timepiece (80) including a piezoelectric motor (100; 101) according to any of the preceding claims.

11. Timepiece (80) according to the preceding claim, including a hand (90) fixed to one end of the cylindrical part (20).
